Europäisches Patentamt

European Patent Office

Office européen des brevets

(11) Publication number: **0 068 730**
**A1**

(12) **EUROPEAN PATENT APPLICATION**

(21) Application number: **82303143.0**

(22) Date of filing: **17.06.82**

(51) Int. Cl.³: **F 02 B 67/04**, F 16 H 9/06

(30) Priority: **18.06.81 GB 8118782**

(43) Date of publication of application: **05.01.83**
**Bulletin 83/1**

(84) Designated Contracting States: **DE FR GB IT**

(71) Applicant: **LUCAS INDUSTRIES public limited company,**
**Great King Street, Birmingham, B19 2XF (GB)**

(72) Inventor: **Cross, Dennis Rowland, 7 Cheltondale Road,**
**Soiihull West Midlands (GB)**
Inventor: **Hemmings, Robert, 49 Masters Lane,**
**Halesowen West Midlands (GB)**

(74) Representative: **Pearce, Anthony Richmond et al, Marks**
**& Clerk Alpha Tower Suffolk Street Queensway,**
**Birmingham B1 1TT (GB)**

(54) **Engine auxiliary drive and an engine auxiliary fitted therewith.**

(57)    A drive for an internal combustion engine to an auxiliary, such as an alternator (10), having an input shaft (18), has a first pulley (16) mounted on the shaft (18) via a centrifugal clutch (20), and a second, larger pulley (17) mounted on the shaft (18) via a unidirectional clutch (22). A first belt (38) from the engine passes over the first pulley (16) and a further pulley (31) adjustably mounted on the alternator (10). A second belt (39) passes over the further pulley (31) and the second pulley (17). Below a predetermined engine speed, the belt (38) drives the shaft (18) via the clutch (20) whilst the second pulley (20) rotates relative to the shaft (18). At higher speeds the clutch (20) automatically disengages and the shaft (18) is driven at a lower speed ratio via the second pulley (17).

In a modification, the further pulley (31) is replaced by separate further pulleys (140, 141) which are operably interconnected by a centrifugal clutch (120) which replaces the clutch (20).

This invention relates to a drive for an engine auxiliary, eg. an alternator or a pump whereby in a low engine speed range, the auxiliary is driven at a first speed ratio and at higher enginer speeds, the auxiliary is driven at a second speed ratio which is lower than the first. This invention also relates to a engine auxiliary, eg. an alternator or a pump, fitted with such a drive.

In the case of alternators, it is important to ensure that a relatively high alternator speed is obtained even at low engine revs to ensure proper battery charging when the engine is running at low speeds. However, this creates the problem that, at higher engine speeds, the alternator may be driven at an undesirably high speed. In order to overcome this problem it has been proposed in French Patent Publication No.2378948 to mount first and second pulleys on a crank shaft of the engine. The first pulley is larger than the second pulley and is connected via a belt with one of a pair of equal diameter pulleys on an air compressor to be driven from the engine. The other pulley of the pair on the air compressor is connected via another belt with the second, smaller diameter pulley. The arrangement is such that, at low engine speeds, a centrifugal coupling connects the first pulley with the crankshaft whilst the second pulley is free to rotate on the crankshaft via a free wheel coupling. At higher engine speeds, the centrifugal coupling disconnects the first pulley from the crankshaft and the free wheel coupling connects the second pulley to the crankshaft so that the auxiliary is driven at a lower speed ratio from the engine. Other auxiliaries are driven by a belt either from further pulleys fixed for rotation with the first and second pulleys or from one of the pulleys associated with the air compressor.

The applicants have found that the disadvantage of this type of drive is that it is difficult, if not impossible,

0068730

to fit to an existing engine where the available space directly in line with the crankshaft is limited. It will be appreciated that in the case of engines used in motor vehicles, the engine cooling radiator will usually be disposed a very short distance in front of the engine and very close to the crankshaft pulley. Additionally, tensioning of two bolts can provide problems in that it may be necessary to provide a separate tensioner for one of the belts, particularly in the case where a further engine auxiliary cannot be driven by one of the two belts which drive the pair of driven pulleys on the first mentioned auxiliary.

In another proposed two speed drive, the auxiliary itself is provided with a single pulley which is mounted on the drive shaft of the auxiliary via an epicyclic gear. In such a construction, a centrifugal mechanism is provided for locking the epicyclic gear to obtain a two speed drive. However, such a construction suffers from the disadvantage that it is expensive, noisy, and requires continuous lubrication.

It is an object of the present invention to obviate or mitigate the above disadvantages.

According to one aspect of the present invention, there is provided an engine auxiliary drive comprising a first driven pulley, a second driven pulley, a changeover mechanism, the pulleys and the changeover mechanism being mounted in use on a rotary input shaft of the auxiliary, the changeover mechanism being arranged so that, below a predetermined engine speed, the first pulley is drivingly connected with the rotary input shaft and the second pulley is rotatable relative to the input shaft and, above said predetermined engine speed, the second pulley is drivingly connected with the rotary input shaft and the first pulley is rotatable relative to the rotary input shaft, a further driven pulley which is preferably rotatably mounted on the auxiliary and adjustable in position relative to the first and second pulleys, but which may be a driven pulley of another engine auxiliary, a first drive belt or the like for engagement with the further pulley, a drive pulley on the engine, and one of the first and second pulleys and a second drive belt or the like for engagement with the other of the first and second pulleys and the further pulley, the arrangement being such that below said predetermined engine speed, the auxiliary is driven via the first driven pulley whilst above said predetermined engine speed, the auxiliary is driven via the second pulley at a lower speed ratio than it is driven via the first pulley.

The above described engine auxiliary drive only requires the provision of one pulley associated with the engine and so can be conveniently provided as a separately fitted drive to an existing auxiliary. The auxiliary drive can be provided even in situations where there is a limited available space in the region of the engine. Additionally, the use of expensive epicyclic gear arrangement is avoided and a relatively simple changeover mechanism which does not require lubrication can be employed.

The changeover mechanism preferably includes a centrifugal device which is operatively disposed between one of the first and second pulleys and the rotary shaft of the auxiliary, and a unidirectional clutch operatively disposed between the other of the first and second pulleys and the input shaft of the auxiliary.

The further driven pulley may be stepped so that the first and second belts run on different effective diameters over the further pulley in which case the first and second pulleys may have the same effective diameter or it may be arranged so that the first and second belts run over the same effective diameter, in which case the first and second pulleys will have different effective diameters.

In a preferred embodiment, the centrifugal device includes at least one friction pad which is fixed for rotation with said one of the first and second pulleys, a drive plate which is fixed for rotation with the rotary input shaft of the auxiliary, and resilient means biasing said at least one friction pad into engagement with the drive plate, said at least one friction pad and said resilient means being arranged so that centrifugal forces generated when the pulley and the pad rotate in use, act in opposition to said resilient means.

Preferably, the centrifugal device includes a pair of friction pads, each of which is rotatable with said one of the pulleys and mounted thereon through the intermediary of a pivot so as to be pivotable towards and away from the input shaft. Each friction pad may be pivotably mounted at one of its ends with respect to said one of the pulleys and is connected with the opposite end of the other pad via a tension spring so that the tension springs urge the friction pads into engagement with the rotary input shaft or a part fixed for rotation therewith. In another embodiment, each friction pad is pivotally mounted at one of its ends with respect to said one of the pulleys and has a slot at its opposite end, said slot being engaged by a post or the like on said one of the pulleys so that said opposite end of each friction pad is movable relative to the first pulley towards and away from the input shaft of the auxiliary, and at least one spring which acts substantially radially is provided for urging each pad inwardly. Preferably, each spring is a compression spring which acts substantially radially.

0068730

In a further embodiment, the friction pads are acted upon by leaf springs so as to urge them inwardly.

The friction pads may engage in a circumferential recess in a part fixed relative to the input shaft of the auxiliary.

According to another aspect of the present invention, there is provided an engine auxiliary drive comprising a first driven pulley, a unidirectional clutch through the intermediary of which the first driven pulley is mounted in use on a rotary input shaft of the engine auxiliary, a second driven pulley adapted to be mounted on said rotary input shaft for rotating the latter, a first further pulley, a second further pulley, speed sensitive means interconnecting the further pulleys so that, above a predetermined rotary speed, rotary drive is transmitted from the first further pulley to the second further pulley, a first drive belt or the like for engagement with a pulley on the engine and with the first driven pulley and the first further pulley, and a second drive belt or the like for engagement with the second driven pulley and the second further pulley, the effective diameters of the pulleys being chosen so that, below a predetermined engine speed, the input shaft is driven via the first and second further pulleys and the second driven pulley at a first speed ratio and, above said predetermined engine speed, the input shaft is driven by said first driven pulley at a second speed ratio which is lower than the first speed ratio.

Also according to the present invention, there is provided an engine auxiliary having a rotary input shaft fitted with an engine auxiliary drive according to the present invention.

It is highly preferred for the further driven pulley to be mounted on a housing of the engine auxiliary so as to be rotatable relative thereto and movable towards and away from the axis of the rotary input shaft for belt tensioning purposes.

In a preferred embodiment the second pulley has a larger effective diameter than the first pulley. The first belt preferably passes around the first pulley.In a modification, the drive from the engine to the auxiliary is effected via the second belt so that the second belt passes around the second pulley, the further pulley and the pulley associated with the engine whilst the first belt merely passes around the first pulley and the further pulley.

Embodiments of the present invention will now be described, by way of example, with reference to the accompanying drawings, in which:-

Fig 1 is a part sectional view of one embodiment of drive according to the present invention fitted on a alternator,

Fig 2 is a front view of the drive and alternator shown in Fig 1,

Fig 3 is a view showing part of the drive of Figs 1 and 2,

Fig 4 is a part sectional view of a second embodiment of a drive according to the present invention fitted on an alternator,

Fig 5 is a front view of the drive and alternator shown in Fig. 4, and

Fig 6 is a part sectional view of a third embodiment of a drive according to the present invention fitted on an alternator.

0068730

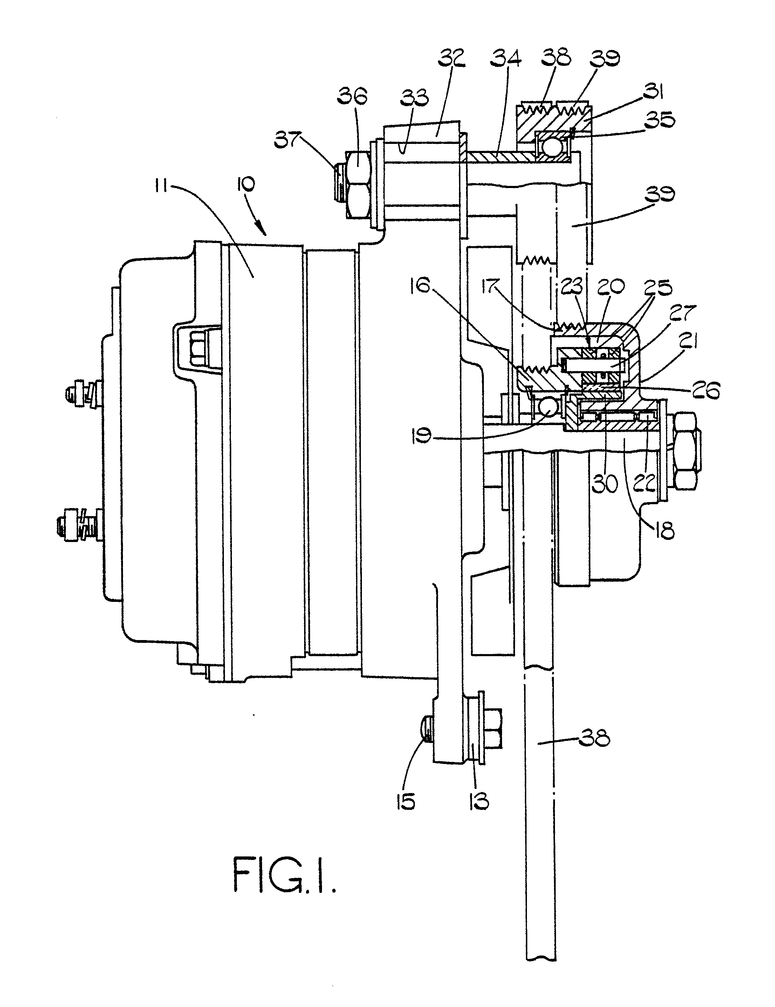

Referring now to Figs 1 to 3, the drive illustrated therein is for transmitting drive from a crankshaft pulley on an internal combustion engine (not shown) in a motor vehicle to an alternator indicated generally by arrow 10. As is usual with alternators, the alternator 10 is provided with a housing 11 which is pivotally mounted on the engine via a support bolt 12 and capable of being clamped in the desired position relative to the engine by means of a mounting bracket 13 having an elongate slot 14 therein and a clamping bolt 15. Such a mounting arrangement for an alternator is known per se and will not be desribed in any further detail except to state that adjustment of the pivotal position of the alternator 10 about the support bolt 12 permits drive belt tensioning.

In this embodiment, the drive comprises a first driven pulley 16 and a second driven pulley 17 which has a larger effective diameter than the first pulley 16. The first driven pulley 16 is mounted on a rotary input shaft 18 of the alternator 10 via a bearing 19 so that it is capable of rotating relative to the shaft 18, and is connected with the shaft 18 via a centrifugal clutch device 20 which will be described in more detail hereinafter.

The second driven pulley 17 is provided on a cup-shaped support member 21 in which the centrifugal clutch device 20 is located. The member 21 is connected with the rotary input shaft 18 via a needle roller clutch 22 which is unidirectional so that, when the shaft 18 is driven at a higher speed than the second pulley 17, relative rotation between the second pulley 17 and the shaft 18 can take place, whilst when the second pulley 17 is rotated at a higher speed than the shaft 18 , the second pulley 17 serves to drive the shaft 18. Such a needle roller clutch 22 is an item which is known per se and will not be described in any further detail. The member 21 is rotatable

0068730

relative to the centrigufal clutch device 20.

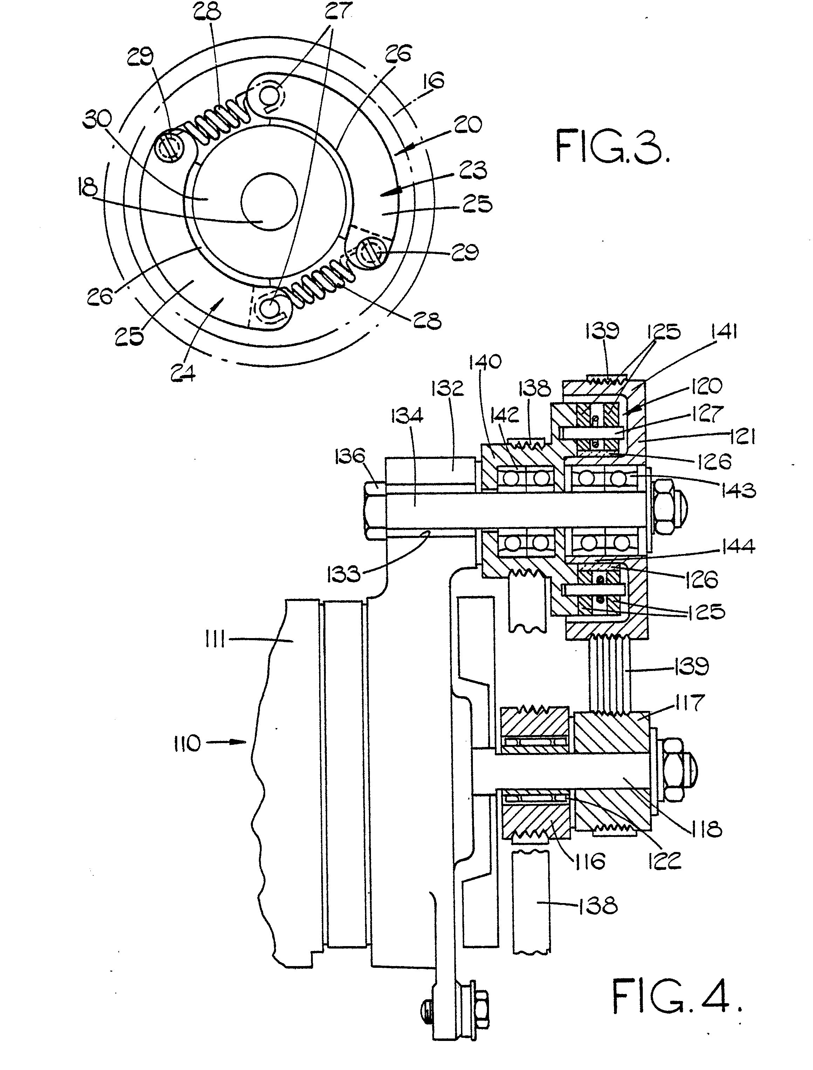

The centrifugal clutch device 20 includes a pair of
friction shoes 23 and 24 (see Fig 3-only friction shoe 23
is illustrated in Fig 1). The shoes 23 and 24 are identical
and each comprises a pair of parallel arcuate plates 25
having an arcuate friction pad 26 secured thereto. Each
shoe 23, 24 is mounted on the first pulley 16 through the
intermediary of a respective pivot pin 27 passing through
aligned holes in the plates 25. Tension springs 28 are
engaged with the respective pivot pins 27 and with
respective mounting screws 29. Thus, the tension springs 28
act in a direction to urge the friction shoes 23 and 24 and
the friction pads 26 inwardly by pivoting the shoes 23 and
24 about the respective pivot pins 27. Keyed to the rotary
input shaft·18 radially inwardly of the clutch device 20 is
a cup-shaped drive plate 30 having an outer peripheral
surface engageable by the friction pads 26.

The drive also includes a further pulley 31 which is
mounted on the housing 11 of the alternator so as to be
freely rotatable relative thereto but movable towards and
away from the axis of the rotary shaft 18 for belt
tensioning purposes. The housing 11 is provided with an
integral boss 32 having a radially directed slot 33 the
further pulley 31 is mounted for free rotation on a stub
shaft 34 via a bearing 35. The stub shaft 34 is engaged in
the slot 33 and can be clamped in the desired radial
position in the slot 33 by means of a nut engaging screw
threading 37 on the shaft 34.

The drive further includes a first drive belt 38 which
passes around the first pulley 16, the further pulley 31
and the crankshaft pulley on the internal combustion
engine. The drive additionally includes a second drive belt
39 which passes around the second pulley 17 and the further

0068730

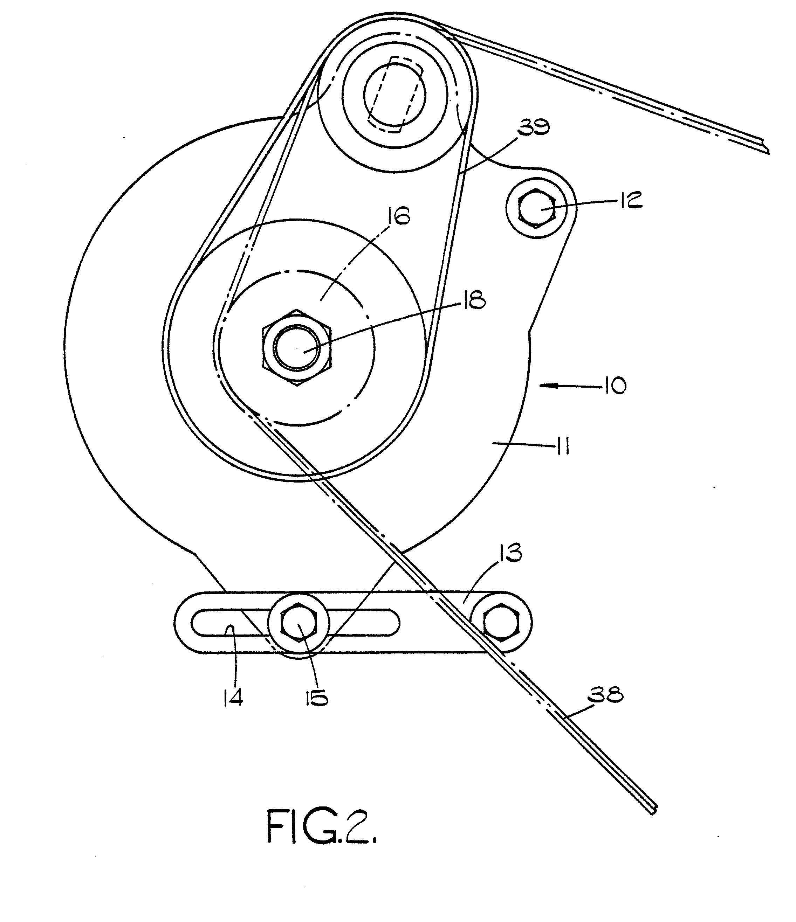

pulley 31. As can be seen from Figs 1 and 2, the first and
second belts 38 and 39 run over portions of the further
pulley 31 which are of equal effective diameter. Tensioning
of the first belt 38 can be effected in the usual way by
releasing the clamping bolt 15 and pivoting the whole
alternator 10 about the axis of support bolt 12. Tensioning
of the second belt 39 can be effected by releasing the nut
36 and moving the further pulley 31 as permitted by
movement of the stub shaft 34 in the slot 33. The second
drive belt 39 is adjusted to the required tension before
the tension of the first belt 38 is adjusted.

In use, whilst the internal combustion engine is operating
at a low speed such as occurs under engine idling
conditions, the first belt 38 drives the alternator 10 via
the first pulley 16 at a speed which is determined by the
ratio of the effective diameters of the crankshaft pulley
and the first pulley 16. Drive from the first pulley 16 to
the alternator 10 is effected via the centrifugal clutch
device 20 wherein the friction pads 26 are engaged with the
outer peripheral surface of the drive plate 30 under the
action of the tension springs 28. Because of the engagement
of the first belt 38 with the further pulley 31, the latter
is also rotated and this causes the second drive belt 39 to
rotate the second pulley 17. However, because the second
pulley 17 has a greater diameter than that of the first
pulley 16, it is rotated at a lower rotational speed than
the rotational speed of the input shaft 18. This is
permitted because of the needle roller clutch 22. Thus, at
low engine speeds, the alternator 10 is driven via the
first pulley 16. As the speed of the internal combustion
engine rises, the centrifugal action resulting from
rotation of the arcuate plates 25 and associated friction
pads 26 causes the former to be pivoted outwardly about the
axes of the respective pivot pins 27. This occurs against
the action of the tension springs 28. At a predetermined engine speed, the arcuate plates 25 have pivotted outwardly
sufficiently far for the drive to the input shaft 18
through the friction pads 26 and the drive plate 30 to be
discontinued. As a result of this, the rotational speed of
the input shaft 18 drops until it matches that of the
second pulley 17, whereupon the needle roller clutch 22
drivingly connects the second pulley 17 with the input
shaft 18. Thus, the alternator 10 continues to be driven by
the internal combustion engine but at a lower speed ratio
because of the difference in diameter between the first and
second pulleys 16 and 17. In this embodiment, the
centrifugal clutch device 20 is arranged so that changeover
will occur at an alternator speed of 8660 rpm, the higher
speed ratio is 3.3 :1 and the lower speed ratio is 2.2:1.

It will be appreciated that the above described drive
enables two alternator speed ratios from a single crankshaft
pulley. If desired, further variations on the speed ratios
can be achieved by arranging for the belts 38 and 39 to run
on portions of the further pulley 31 which are at different
effective diameters. Thus, if desired, or if necessary, the
first and second driven pulleys 16 and 17 could be arranged
to have the same effective diameter provided that the belts
38 and 39 run at different effective diameters on the
further pulley 31.

Adjustment of the tension of the individual belts 38 and 39
is readily possible as will be appreciated from the above
description.

If desired, the above described drive may be modified so
that the belt which passes around the second pulley 17
also passes around the crankshaft pulley of the internal
combustion engine, whilst the belt which passes around the
first pulley 16 is arranged to pass only around the further
pulley 31.

In a further modification, the further pulley 31 is
dispensed with and the belts 38 and 39 are arranged to pass
over a driven pulley of another engine auxiliary, for
example a power steering pump or jockey pulley which is
adjustably mounted to enable individual belt tensioning.
Such pump may be positioned to provide the optimum angle of
lap for the first belt 38 around the first pulley 16.

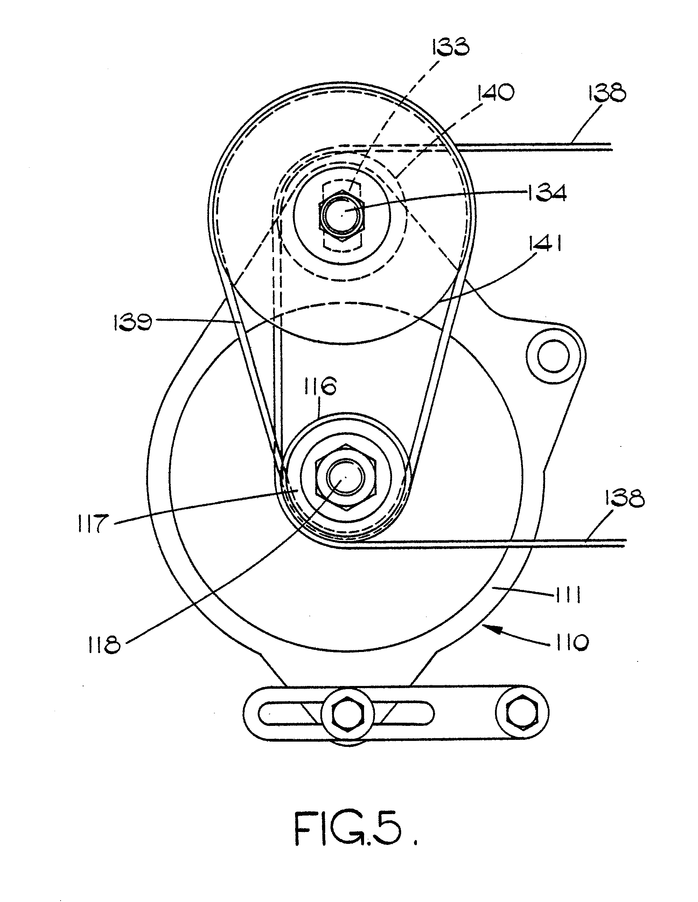

Referring now to Figs. 4 and 5 of the drawings, the second
embodiment illustrated therein operates to provide a two
speed ratio drive and parts which are similar to that
described with reference to Figs 1 to 3 are accorded the
same reference numerals but preceded by the numeral 1.

In this embodiment, first and second driven pulleys 116 and
117, respectively, are of substantially the same diameter.
The first pulley 116 is mounted on rotary input shaft 118
of alternator 110 via unidirectional needle roller clutch
122. The second pulley 117 is directly keyed to the shaft
118. In place of the single further pulley 31 described
above with reference to Figs. 1 to 3, in this embodiment
the drive is provided with first and second further pulleys
140 and 141 which are rotatably mounted on stub shaft 134
via respective bearings 142 and 143. The first further
pulley 140 has a smaller effective diameter than that of
the second further pulley 141 and is provided with
centrifugal clutch device 120 including parallel arcuate
plates 125, friction pads 126, and pivot pins 127. The
friction pads 126 act on sleeve 144 which forms part of
cup-shaped support member 121 of the second further pulley
141. The manner in which centrifugal clutch device operates
is the same as that described above with reference to the
centrifugal clutch device 20.

First drive belt 138 passes around the crankshaft pulley (not shown) of the internal combustion engine, around the first driven pulley 116, and around the first further pulley 140. Second drive belt 139 passes only around the second driven pulley 117 and the second further pulley 141.

In use, whilst the internal combustion engine is operating at low speed, the first belt 138 drives the alternator 110 via the first further pulley 140, the second further pulley 141, and the second pulley 117. It is to be appreciated that, under these conditions, the friction pads 126 are engaged with the outer surface of sleeve 144 so that drive can be transmitted from the first further pulley 140 to the second further pulley 141. Because of the difference in effective diameters between the pulleys 140 and 141, the shaft 118 is driven at a higher speed than it would be if driven directly by first pulley 116. Under these conditions, rotation of the shaft 118 relative to the first pulley 116 is permitted because of the needle roller clutch 122. At a predetermined engine speed, the centrifugal clutch device 120 operates so that drive is no longer transmitted from the first further pulley 140 to the second further pulley 141. Under these conditions, the rotational speed of the shaft 118 drops until it matches that of the first pulley 116, whereupon the needle roller clutch 122 drivingly connects the first pulley 116 with the input shaft 118.

With the embodiment of Figs. 4 and 5, the speed of rotation of the shaft 118 below said predetermined engine speed is governed by the ratio of the effective diameter of the crankshaft pulley to the effective diameter of the first further pulley 140, and the ratio of the effective diameter of the second further pulley 141 relative to the respective diameter of the second pulley 117. Thus, a two stage speed increase is possible with the result that a high overall

0068730

ratio can be obtained. With the embodiment of Figs. 4 and 5, the overall pulley ratio under low engine speed modes of operation can be 4:1 or higher. In the present embodiment, by way of example, the ratio is 4.44:1, there being a pulley ratio of 2:1 between the crankshaft pulley and the first further pulley 140 and a pulley ratio of 2.22:1 between the second further pulley 141 and the second pulley 117. Thus, it is possible either to obtain a greater alternator output at lower engine speeds for a given size of alternator, or to obtain the same alternator output using a smaller alternator at low engine speeds.

At higher engine speeds, the pulley ratio between the crankshaft pulley and the first pulley 116 can be as little as 2.0:1 so that the alternator is driven relatively slowly at higher engine speeds. In this embodiment, the changeover from high ratio to low ratio , and vice versa is arranged to occur at an engine speed of about 2800 rpm. By avoiding rotation of the alternator at high speeds at higher engine speeds, it can be run efficiently. In this respect, it is to be appreciated that, the faster an alternator is rotated, the greater the electrical losses (so-called iron losses) and the greater the losses through absorbtion by the alternator cooling fan (windage losses).

With the embodiment of Figs 4 to 5, during speed changing from the low ratio to the high ratio (as the engine speed decreases to below the predetermined speed), the centrifugal clutch transmits the torque necessary to accelerate  the rotor of the alternator to a higher speed. Whereas, in the embodiment of Figs. 1 to 3, the shock torque as a result of the speed change is transmitted only through the first belt 38, in the embodiment of Figs 4 and 5, the torque is transmitted through both the first and second belts 138 and 139 with the result that there is more resilience in the drive to absorb the shock torque. Also, by arranging for a two stage speed increase, with a ratio
of approximately 2:1 in each stage, as in the embodiments
of Figs 4 and 5, the first belt 138 can be of a smaller
size than would be necessary to provide a 3:1 ratio for the
embodiment of Figs 1 to 3.

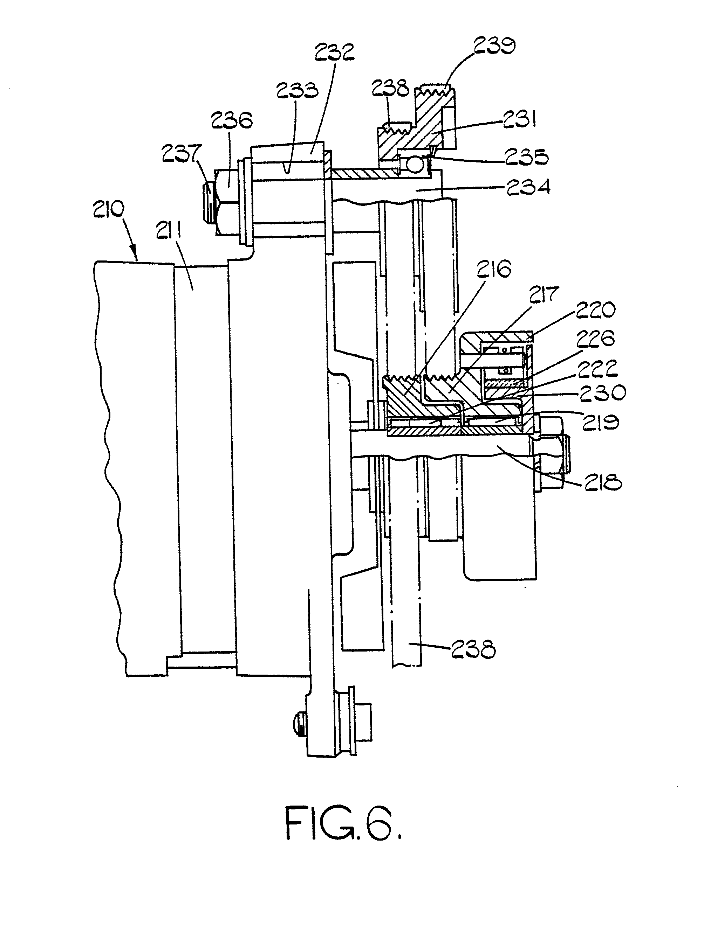

Referring now to Fig 6, the embodiment illustrated therein
is similar to that of Fig 1 and similar parts are accorded
the same reference numerals but preceded by the numeral 2.
In this embodiment, input shaft 218 of alternator 210 has
first pulley 216 mounted thereon through the intermediary
of needle roller clutch 222, and has second pulley 217
mounted thereon through the intermediary of roller bearing
219. The second pulley is operably connected with shaft 218
via centrifugal clutch device 220. The first and second
pulleys 216 and 217 have the same effective diameter.

Further pulley 231 comprises pulley portions 240 and 241
over which respective first and second belts 238 and 239
run. Further pulley 231 is freely rotatable relative to
stub shaft 234 on bearing 235. The pulley portion 240 over
which first belt 238 runs has a smaller effective diameter
than that of pulley portion 239 over which the second
pulley 239 runs.

Thus, it will be appreciated that, like the embodiment of
Figs 4 and 5, a two stage speed increase is obtained. Under
the low engine speed mode of operation, drive to the
alternator 210 is via belt 238, further pulley 231, belt
239, second pulley 217, and clutch device 220, with the
first pulley 216 rotating relative to the shaft 218. Under
the high engine speed mode of operation, the clutch device
220 is disengaged and drive to the shaft 218 is taken up
via the first pulley 216 and the clutch 222.

With the embodiment of Fig 6, it is possible for drive to

0068730

be transmitted from the engine crankshaft pulley via the second belt 239 rather than the first pulley 238 as indicated on the drawing.

The drives described above with reference to the drawings have the advantage that (1) only a single crankshaft pulley on the engine is required, that (2) no jockey pulleys are required, (3) they are cheaper and easier to manufacture (4) they are quieter in use than an epicyclic pulley arrangement, (5) they require no lubrication even at very high alternator speeds (up to 12000 rpm),(6) they are of relatively low mass, (7) they are easy to fit on the input shaft of the auxiliary and easy and convenient to service. Additionally, since only one crankshaft pulley is required, the modified drive can usually be fitted quite easily to an existing installation. Furthermore, the belt which does not pass around the engine crankshaft pulley need only be short.

In the above described embodiments, the belts are shown as poly-V belts. However, it is to be appreciated that any other form of belt such as a single V or flat belt, a notched belt or a cog belt or any otherendless flexible drive element may be employed.

CLAIMS

1. An engine auxiliary drive comprising (1) a first driven pulley (16,116,216); (2) a second driven pulley (17.117.217); (3) a changeover mechanism (20,22,220,222) the pulleys and the changeover mechanism being mounted in use on a rotary input shaft (18,218) of the auxiliary (10,210), the changeover mechanism being arranged so that, below a predetermined engine speed, the first pulley (16,216) is drivingly connected with the rotary input shaft (18, 218) and, the second pulley (17, 217) is rotatable relative to the input shaft (18, 218) and, above said predetermined engine speed, the second pulley (17, 217) is drivingly connected with the rotary input shaft and the first pulley (16, 216) is rotatable relative to the rotary input shaft; (4) a further driven pulley (31, 231); (5) a first drive belt or the like (38, 238) for engagement with (a) the further pulley (31, 231); (b) a drive pulley on the engine, and (c) one of the first and second pulleys (16, 216, 17, 217), and (6) second drive belt or the like (39, 239) for engagement with the other of the first and second pulleys (16, 216, 17, 217), and the further pulley (31, 231), the arrangement being such that below said predetermined engine speed, the auxiliary is driven via the first driven pulley (16, 216) whilst above said predetermined engine speed, the auxiliary is driven via the second pulley (17, 217) at a lower speed ratio than it is driven via the first pulley (16, 216).

2. A drive as claimed in claim 1 or 2 wherein the further driven pulley (31, 231) is rotatably mounted on the auxiliary.

0068730

3. A drive as claimed in claim 1, wherein the further driven pulley (31, 231) is a driven pulley of another engine auxiliary.

4. A drive as claimed in any preceding claim, wherein the changeover mechanism (20, 22, 220, 222) includes a centrifugal device (20, 220) which is operatively disposed between one of the first and second pulleys (16, 216 and 17, 217) and the rotary shaft (18, 218) of the auxiliary, and a unidirectional clutch (22, 222) operatively disposed between the other of the first and second pulleys (16, 216 and 17, 217) and the rotary shaft (18, 218) of the auxiliary.

5. A drive as claimed in any preceding claim, wherein the further driven pulley (231) is stepped so that the first and second belts (238 and 239) run on different effective diameters over the further pulley (231).

6. A drive as claimed in claim 4 wherein the centrifugal device includes at least one friction pad (26, 226) which is fixed for rotation with said one of the first and second pulleys (16, 216 and 17, 217), a drive plate (30, 230) which is fixed for rotation with the rotary input shaft (18, 218) of the auxiliary, and resilient means (28, unreferenced) biasing said at least one friction pad into engagement with the drive plate, said at least one friction pad and said resilient means being arranged so that centrifugal forces generated when the pulley and the pad rotate in use, act in opposition to said resilient means.

7. A drive as claimed in claim 6, wherein the centrifugal device includes a pair of friction pads (26, 226) each of which is rotatable with said one of the first and second pulleys and mounted thereon through the intermediary of a pivot (27, 227) so as to be pivotable towards and away from the input shaft (18, 218).

8. An engine auxiliary drive comprising a first driven pulley, (116) a unidirectional clutch (122) through the intermediary of which the first driven pulley (116) is mounted in use on a rotary input shaft (118) of the engine auxiliary (110), a second driven pulley (117) adapted to be mounted on said rotary input shaft (118) for rotating the latter, a first further pulley (140), a second further pulley (141), speed sensitive means (120) interconnecting the further pulleys (140 and 141), so that, above a predetermined rotary speed, rotary drive is transmitted from the first further pulley (140) to the second further pulley (141), a first drive belt (138) or the like for engagement with a pulley on the engine and with the first driven pulley (116) and the first further pulley (140), and a second drive belt (139) or the like for engagement with the second driven pulley (117) and the second further pulley (141), the effective diameters of the pulleys (116, 117, 140 and 141) being chosen so that, below a predetermined engine speed, the input shaft (118) is driven via the first and second further pulleys (140 and 141) and the second driven pulley (117) at a first speed ratio and, above said predetermined engine speed, the input shaft (118) is driven by said first driven pulley (116) at a second speed ratio which is lower than the first speed ratio.

9. A drive as claimed in claim 8, wherein the further pulleys (140, 141) are rotatably mounted on the auxiliary (110).

10. A drive as claimed in claim 2, or 9, wherein thhe further pulley (31, 231) or pulleys (140, 141) is or are mounted on a housing (11, 111, 211) of the auxiliary (10, 110, 210) so as to be rotatable relative thereto and movable towards and away from the axis of the rotary input shaft (18, 118, 218) to enable tensioning of the belt or the like.

11. An engine auxiliary having a rotary input shaft (18, 118, 218) fitted with an engine auxiliary drive as claimed in any preceding claim.

FIG.I.

FIG.2.

0068730

FIG.3.

FIG.4.

FIG.5.

FIG.6.

European Patent Office

**EUROPEAN SEARCH REPORT**

0068730

Application number

EP 82 30 3143

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A,D | FR-A-2 378 948 (BOSCH)<br><br>* page 1, lines 1-12; page 4, line 1 to page 6, line 10; figures 1,2 * | 1,3,4, 8,10, 11 | F 02 B 67/04<br>F 16 H 9/06 |
| A | DE-A-2 055 404 (DAIMLER BENZ)<br>* page 2, paragraph 5 to page 3, paragraph 2; figures 1,2 * | 1,5,8 | |
| X,P | FR-A-2 486 610 (DE PARIS ET DU RHONE)<br>* page 1, line 1 to page 10, line 3; figures 1-3 * | 1-5,8-11 | |
| X,P | DE-A-2 952 249 (MAGNETI MARELLI)<br>* page 1, claim 1 to page 3, claim 10; figures 1,2 * | 1,4-8, 11 | **TECHNICAL FIELDS SEARCHED (Int. Cl. ³)** |
| A | FR-A-2 201 739 (F.M.C.)<br><br>* page 4, lines 4-30; figures 1-3 * & GB - A - 1 433 220 | 1,4,5, 8 | F 02 B<br>F 01 P<br>F 16 H |
| A | US-A-3 436 977 (GREDELL)<br>* column 2, lines 1-58; figures 1,2 * | 1,4-8 | |

The present search report has been drawn up for all claims

| Place of search | Date of completion of the search | Examiner |
|---|---|---|
| THE HAGUE | 10-09-1982 | KOOIJMAN F.G.M. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document